# EUROPEAN PATENT APPLICATION

(11) **EP 3 305 733 A1**
(43) Date of publication of application: **11.04.2018**
(21) Application number: 16192868.4
(22) Date of filing: 07.10.2016
(51) Int. Cl.: C02F 11/12, B01D 33/067, B01D 33/073, B01D 33/80, B01D 36/04, C02F 1/00

(54) **FILTERING UNIT FOR WASTE COLLECTING AND/OR TREATING EQUIPMENT**

(71) Applicant: Jurop S.p.A., 33082 Azzano Decimo (Prov. of Pordenone) (IT)
(72) Inventor: SANTAROSSA, Danilo, 33082 AZZANO (IT)
(74) Representative: De Bortoli, Tiziano

(57) **Abstract**

The present invention relates to a filtering unit (1) for separating and filtering water contained in sludge waste. The unit is connectable to a tank (2) defining at least one collection compartment (200) of said sludge waste. The filtering unit comprises a first filtering module (21) and a second filtering module (22) for filtering said water. The unit further comprises a circulation line (70) for transferring the water filtered by the first module (21) to the second module (22), and a collection line (80,80A) to collect and convey the part of water also filtered by said second module (22). The unit further comprises a supporting frame (12) which supports the modules (21,22). Such a frame is either partially or completely insertable into the compartment (200) of the tank (2) through a the manhole (114). Finally, the unit (1) comprises connection means configured to form a connection between the frame (12) and the tank (2) so that said filtering modules (21,22) are operatively connected within said compartment (200) upon such a connection.

## Description

### FIELD OF THE INVENTION

The present invention belongs to the field of manufacturing fixed or movable equipment which can be used for collecting and/or treating waste in semi-solid, sludgy, liquid or gaseous state. In particular, the present invention relates to a filtering unit which can be inserted into a compartment of a tank of waste collecting and/or treating equipment. The present invention also relates to equipment, preferably in the form of a tank truck, comprising such a filtering unit.

### BACKGROUND ART

The use of tank truck for loading, transporting and unloading products, typically waste in solid, semi-solid, liquid sludgy or gaseous state, is known. A tank truck comprises a vehicle on the chassis of which a tank and a series of devices (sludge suction pumps or compressors) for aspirating the sludge waste are mounted. Such aspiration occurs by generating a vacuum in the tank or in a compartment thereof, so that the sludge is aspirated directly into the tank. Normally, a tank has two main objects: to provide a reserve useful for washing pit or pipes and to accommodate/collect the sludge and the aspirated waste. For this reason, a tank usually comprises two compartments, one for collecting sludge and the other as reservoir for water for cleaning operations. In order to increase operation efficiency, and the operative autonomy of the vehicle as a consequence, filtering and recirculating systems have been developed over the years which allow the reuse of the part of water separated and filtered from the aspirated sludge.

In nearly all cases, such systems comprise a primary filter, typically located inside the compartment of the tank which collects the sludge. A secondary filter is instead installed outside the tank. The water is subjected to at least two filtering stages. In particular, the water processed by the primary filter is transferred to the secondary filter through a recirculation pump, also typically located outside the tank. Once processed by the secondary filter, the water reaches a second compartment which works as a reservoir. From the second compartment, the water crosses a filter located upstream of a high pressure pump which allows to reuse the water from the tank for cleaning operations.

In order to improve filtering quality, in some known solutions, a third filtering stage is provided operatively downstream of the second stage. In these solutions, the tank also comprises a third compartment and a further circulation line provided with a further pump, through which the water exiting from the second compartment reaches the third filtering stage. The water exiting from the third filtering stage reaches the third compartment and then the high pressure pump.

The filtering systems described above achieve very high filtering levels, which in some cases can reach even 5 microns by using appropriate filters. However, this appreciable result is accompanied by a high construction cost, on which system assembly considerably weighs. Indeed, besides the primary filter, the other water circulation components (pipes, pumps) and the other filters are operatively arranged around the tank. In practice, nearly all components are fixed to the outside of the tank. In addition to the considerable design and installation difficulties established by this constructional choice, the criticality generated by such filtering systems in terms of overall dimensions is also apparent.

It has also been found that in some cases, the resulting filtering levels, and thus the incurred manufacturing costs, are not always justified by the actual use of the tank truck. In other words, a filtering level in the order of 5 microns is not required for some uses. The systems described above are also critical because they considerably limit the versatility of use of the tank. Indeed, because of the traditional filtering system configuration, a tank used for collecting sludge cannot be applied for alternative uses, such as for example for collecting special waste (e.g. sodium hydroxide).

In view of the considerations above, it is the main task of the present invention to provide a solution which can be an alternative to traditional filtering systems and allows to overcome the above-described drawbacks. In the scope of this task, it is a first object of the present invention to provide a filtering unit which has relatively low construction costs and which achieves effective filtering at the same time. It is another object of the present invention to provide a filtering unit which confers versatility and flexibility of use to the tank. It is another object of the present invention to provide a filtering unit which can be connected to a tank without influencing the overall dimensions. It is not the last object of the present invention to provide a filtering unit which is reliable and easy to be manufactured at competitive costs.

### SUMMARY

The present invention relates to a filtering unit for a collection tank and/or the treatment of sludge waste comprising a part of water. In particular, the unit according to the invention is intended for a tank defining at least one collection compartment of said sludge waste. The filtering is characterized in that it comprises a first filtering module and a second filtering module for separating and/or filtering the water contained in the sludge. The filtering unit further comprises a circulation line to transfer the water filtered by the first module to the second module, and a collection line to collect and convey the part of water filtered by said second module. The filtering unit according to the invention further comprises a frame which supports the filtering modules and which is either partially or completely insertable into the tank compartment. The filtering unit further comprises connection means configured to provide a preferably removable connection between the frame and the tank so that the filtering modules are operatively arranged within the compartment upon such a connection.

By means of the filtering unit according to the invention, the water contained in the aspirated sludge is advantageously separated and filtered in the collection compartment. More precisely, the filtering unit is configured to form no fewer than two water filtering stages in the collection compartment. With respect to the traditional solutions, the invention allows to reduce the equipment assembly times and costs. The possibility of removing the filtering unit from the tank allows to load products which could compromise the durability of the filtering/recycling system, thus making the equipment (e.g. the tank truck) more versatile and flexible in use.

### LIST OF DRAWINGS

Further features and advantages of the present invention will become more apparent from the following detailed description provided by way of non-limiting example and shown in the accompanying drawings, in which:
- Figure 1 is a perspective view of a tank comprising a filtering unit according to the present invention;
- Figure 2 is a view related to the step of inserting the filtering unit of Figure 1 into the tank of Figure 1;
- Figure 3 is a cutaway view of the tank in Figure 1;
- Figures from 4 to 7 are views from different points of observation of a filtering unit according to the present invention;
- Figure 8 is an exploded view of the filtering unit of Figures from 4 and 8;
- Figure 9 is a diagram related to control means of a filtering unit according to the present invention.

The same reference numbers and letters in the figures refer to the same elements or components.

### DETAILED DESCRIPTION

With reference to the mentioned figures, the present invention relates to a filtering unit generally indicated by reference numeral 1. In particular, unit 1 identifies equipment for collecting and/or treating sludge waste, the term "sludge" indicating waste comprising at least one part of water. Unit 1 is configured to separate the water from the sludge waste and to filter the water itself.

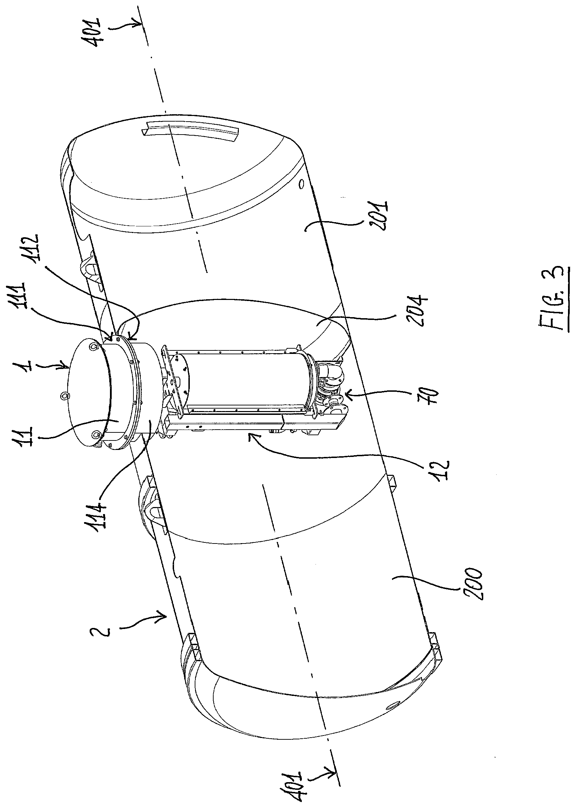

With reference to Figures from 1 to 3, discussed below, unit 1 is at least partially insertable into a tank 2 which can be fitted on a vehicle (not shown), so as to configure a tank truck as a whole. Alternatively, tank 2 may be arranged on a fixed supporting structure. The sludge can be collected in tank 2 by means of suction devices of known type, which are not described because they are not pertinent to the present invention. Tank 2 is provided with an opening bottom 2D so as to allow the access of operators for cleaning operations during maintenance of the equipment (tank truck). As shown in the view in Figure 3, tank 2 preferably comprises a first sludge waste collection compartment 200 and a second compartment 201 for collecting the water filtered by the filtering unit 1. The two compartments 200,201 are divided by a partition wall 204, which is either fixed or adjustable in position along the development axis 401 of tank 2.

Figures from 4 to 9 are views from different points of observation of a filtering unit 1 according to the present invention. Such a unit 1 comprises at least a first module 21 and a second filtering module 22, which form a first filtering stage and a second filtering stage of the water contained in the sludge waste, respectively. Unit 1 is further provided with a circulation line 70 configured to transfer the water filtered by the first module 21 to the second module 22. The water filtered by the second module 22 is advantageously conveyed into a collection line 80, while the part of water not filtered by the second module 22 is conveyed on a discharge line 81.

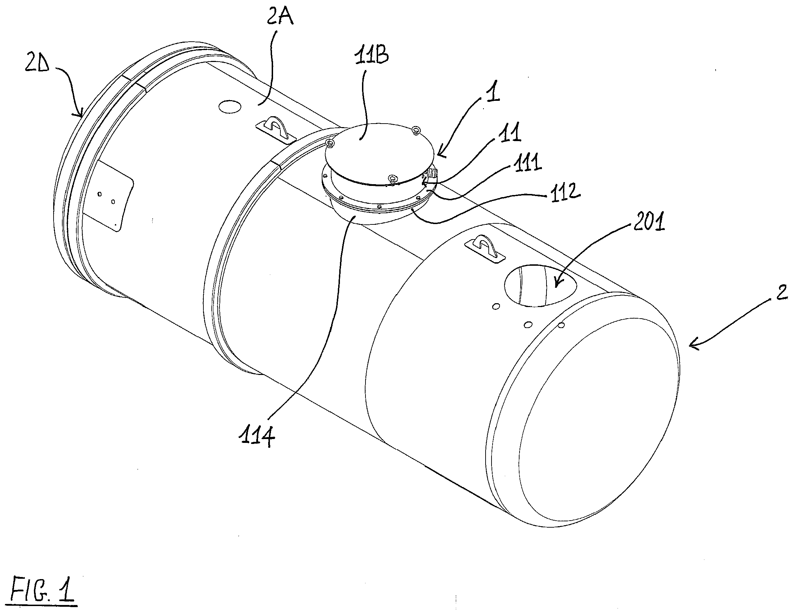

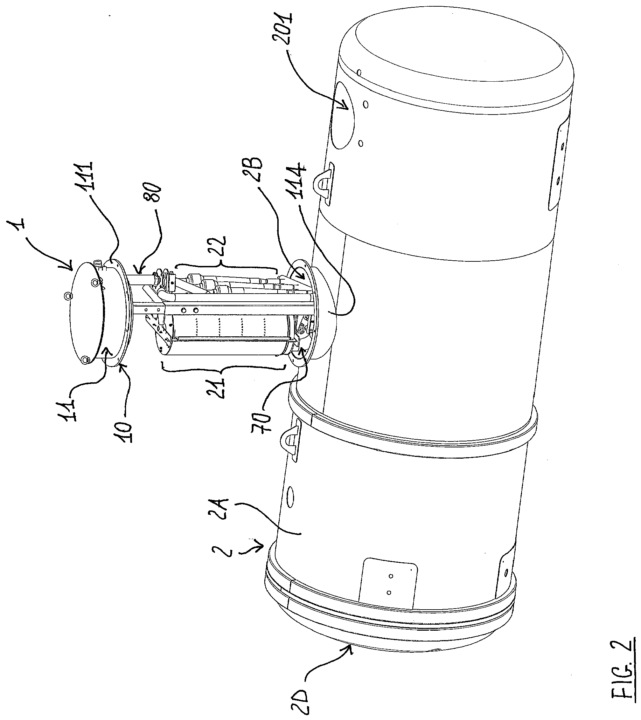

The filtering unit 1 comprises a supporting frame 12 which supports the first module 21 and the second module 22. In particular, frame 12 is configured so as to be insertable through a manhole 114 of tank 2 for which unit 1 is intended so that, once in use, the filtering modules 21,22 are arranged inside the tank 2. For the purposes of the present invention, the term "manhole 114" indicates a hollow element which is connected, and preferably welded, to the body 2A of tank 2 around an opening 2B defined through the body itself (see figures 1 and 2). Preferably, manhole 114 has a circulare section, the extension of which corresponds to that of said opening 2B. The hollow part of manhole 114 and the opening 2B make the first compartment 200 communicating with the outside, thus defining a passageway for inserting the frame 12 of unit 1.

In order to allow the connection to tank 2, unit 1 comprises connection means configured to form a connection between frame 12 and tank 2 so that the filtering modules 21, 22 are operatively arranged inside the first compartment 200 upon such a connection. According to a preferred embodiment, such connection means comprise a base 10 from a first side 10A of which the frame 12 develops. Preferably, base 10 is provided with a flange 111 which is connectable, for example through screw/bolt joints, to a corresponding flange 112 fixed to the tank 2, preferably to the end of the manhole 114. Preferably, the two flanges 111,112 are circular flat. However, the two flanges 111,112, like the manhole 114, could also take other shapes.

Figure 2 refers to the step of inserting unit 1 into tank 2 through the manhole 114. Preferably, the manhole 114 emerges from the upper portion of body 2A so that unit 1 can be inserted/dropped, e.g. by means of a crane or a lift truck, into the tank itself according to a substantially vertically insertion direction. The possibility of arranging a manhole 114 in another position, and thus defining another insertion direction, is also within the scope of the present invention. With reference to Figure 1, the insertion of unit 1 is completed when the two flanges 111,112 come into contact. In this condition, the frame 12 and the two modules 21,22 thus remain in the first compartment 200, i.e. inside the tank 2. The connection between the two flanges 111,112 further seals the collected material in the tank 2, thus preventing the sludge from exiting through the manhole 114.

Again with reference to the mentioned figures, unit 1 preferably comprises a containment 11 which develops from a second side 10B of the base opposite to the first side 10A from which frame 12 develops. In other words, the position of containment 11 is opposite to that of the supporting frame 12 with respect to base 10. As apparent from the mentioned figures 1-3, after connecting base 10 to tank 2, containment 11 remains advantageously outside tank 2, i.e. outside the first compartment 200. Control means of unit 1, i.e. means configured to control the operation of the modules 21,22 and/or of the operative means arranged along the circulation line 70 and/or along the collection line 80, are preferably located in the containment 11. The substantially *"outer"* position occupied by containment 11 makes the control means advantageously accessible for possible intervention/adjustment operations.

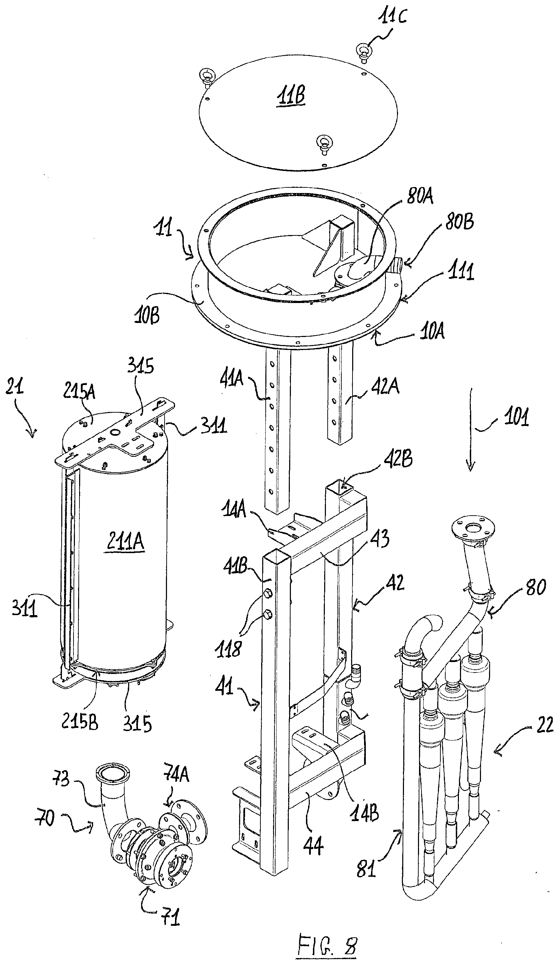

In this regard, according to an embodiment shown in Figure 8, containment 11 preferably comprises a hollow body 11 A which develops from the mentioned second side 10B of the base 10 and a removable lid 11 B which closes the hollow body 11 A in a position opposite to base 10. Hooking means 11 C adapted to promote lifting are preferably provided to remove lid 11 B.

According to another aspect of the present invention, the collection line 80,80A of the water filtered by the second module 22 advantageously crosses the base 10. Thereby, once unit 1 is connected to the 2, the water filtered by the first module 21 and by the second module 22 may be advantageously conveyed outside the first compartment 200, e.g. into the second compartment 201 of the tank 2. The filtered water may be used for washing operations by exploiting the pressure generated by an appropriate pump according to a principle known in itself.

In the embodiment shown in the figures, it is worth noting that a stretch 80A of the collection line 80 crosses containment 11 and a terminal part 80B exits from the containment itself to be connected to a further stretch (not shown), which will be completely outside the tank 2.

With reference to the figures from 4 to 8, the base 10 preferably develops along a plane 100 and frame 12 prevalently develops along a development direction 101 which is substantially orthogonal to plane 100. According to another advantageous aspect of the present invention, the frame 12 is preferably extensible/retractable in a reference direction. In other words, frame 12 is provided with adjustment means which allow to adjust the extension along said reference direction which is preferably parallel to the development direction 101 defined above. This technical solution makes unit 1 particularly versatile because the extension of frame 12 may be adjusted as a function of the diametrical extension of the tank 2 for which unit 1 is intended.

According to a preferred embodiment shown in the figures, frame 12 comprises two longitudinal elements 41,42, connected to the first side 10A of base 10, which develop along the development direction 101 as indicated above. Frame 12 further comprises two transversal elements 43,44 which develop prevalently along a transversal direction 102 substantially orthogonal to the development direction 101. In particular, a first transversal element 43 is connected to the two longitudinal elements 41,42 in a position close to base 10, while a second transversal element 44 is connected to the longitudinal elements 41,42 in a position close to a terminal part of the longitudinal elements 41,42 which is opposite to the base 10 itself. With reference, in particular to the exploded view in Figure 8, in order to allow the adjustment of the extension of frame 12 along the development direction 101, the longitudinal elements 41,42 comprise a first terminal part 41 A,42A fixed to the first side 10A of base 10 and telescopically inserted into a second part 41B,42B of the element itself. The insertion position of the first part 41A,42A in the second part 41B,42B, or vice versa, is established by using screw means 118 or other functionally equivalent means. Such an insertion position thus establishes the extension of the frame 12 along the development direction 101.

According to a preferred embodiment, the first module 21 comprises a filtering cartridge 211 and rotation means to rotate cartridge 211 about a rotation axis 150. Frame 12 supports the cartridge 211 and the rotation means. In particular, the first module 21 is supported so that the rotation axis 150 of cartridge 211 is substantially parallel to the development direction 101 of the frame itself. This arrangement contains the overall dimensions of unit 1.

The filtering cartridge 211 comprises a body with a substantially cylindrical development 211 A defining an inner cavity (not shown in the figures) and some radial passageways. The latter allow the water to pass from the outside towards said inner cavity, while preventing some material from passing. Body 211 A is closed at the ends by two containment plates 215A, 215B connected in a rotatable way to corresponding brackets 14A, 14B of frame 12. In the embodiment shown in the figures, for example, frame 12 comprises a first plate 215A connected rotationally to a first bracket 14A emerging from the first transversal element 43, while a second plate 215B is connected in a rotatable way to a second bracket 14B emerging from the second transversal element 44. As a whole, such rotational connections configure the rotation axis 150 of the filtering cartridge 211.

Preferably, the first module 21 also comprises scraper means operatively associated with the filtering cartridge 211 to scrape the outer surface of the body 211 A during the rotation of the cartridge itself. As shown in the figures, such scraper means comprise two scraping blades 311 which intervene on the body 211 A in diametrically opposite positions and which are supported at the ends by a corresponding plate 315 adjacent to a corresponding containment plate 215A,215B of cartridge 211. In particular, the scraping blades 311 are connected to the plates 315 so as to slide according to a substantially radial direction with respect to the rotation axis 150 of cartridge 211. Appropriate elastic means act on the scraping blades 311, e.g. helical springs, so as to keep the blades in contact with the outer surface of body 211 A. Thereby, during the rotation of cartridge 211, the solid part of the sludge is scraped by the outer surface of body 211 A in two diametrically opposite regions.

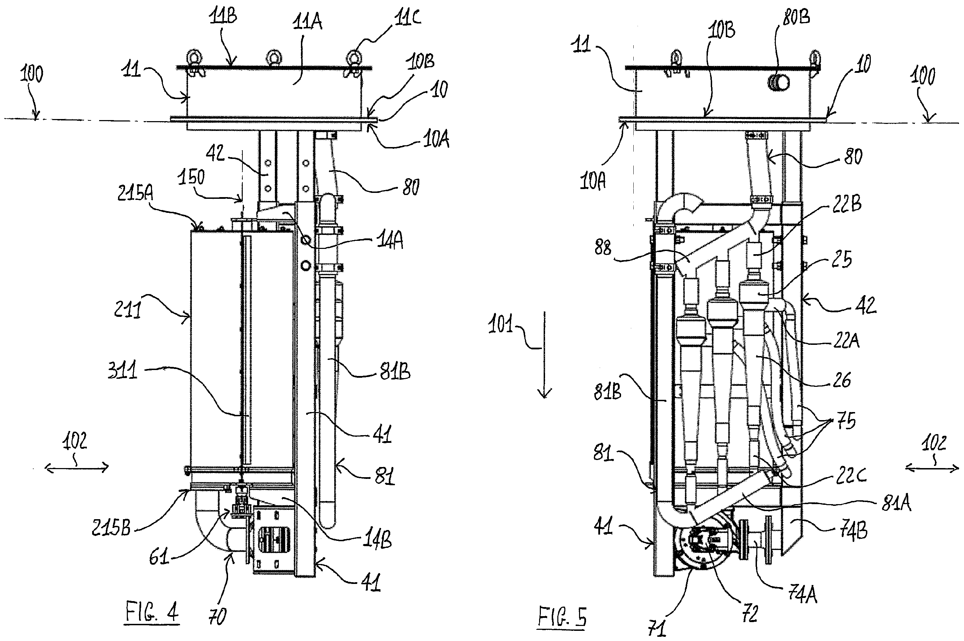

Preferably, the rotation means comprise a hydraulic motor 61 connected to one of the containment plates 215A,215B so as to rotate the plate, and the cartridge 211 as a consequence. In the example shown in the figures, the hydraulic motor 61 is installed in a more distal position from base 10 under the containment plate 215B (see Figure 4). Such a plate 215B further defines an opening through which the water filtered by cartridge 211 reaches the circulation line 70. Substantially, such an opening defines the outlet of the first module 21 connected to the connection line 70.

According to another aspect of the invention, the circulation line 70 comprises a circulation pump 71, actuated by a hydraulic motor 72, the suction of which is connected to the outlet of the first module 21 through a first line stretch 73, preferably in the form of piping. The circulation line 70 further comprises a second stretch 74A, 74B which connects the delivery of pump 71 to the second module 22. In the solution shown in the figures, such a second stretch 74A, 74B is defined by a piping part 74A and a terminal part 74B of a longitudinal element 41 of the frame 12. In other words, a hollow portion of a frame element 12 is advantageously exploited as circulation stretch of the water intended to the second module 22. This solution allows to simplify the configuration of the circulation line 70 and to contain dimensions. According to another aspect, the second module 22 comprises at least one cyclone separator, which includes at least one inlet section 22A communicating with the circulation line 70, a first outlet section 22B communicating with the collection line 80 and a second outlet line 22C communicating with the discharge line 81. The cyclone separator has a conformation known in itself defined by a substantially cylindrical portion 25 in which the water enters according to a tangential direction to take a spiral (swirling) motion in the chamber itself. The chamber 25 defines the first outlet section 22B connected to the connection line. The cyclone separator further comprises a conical portion 26 underneath and communicating with the cylindrical one.

Due to the spiral motion imparted to the water, the solid particles adhere to the inner surface of the cylindrical part 25 to then slide by gravity along the walls of the conical portion 26 to reach the second outlet section 22C defined by the conical portion 26 itself. The water filtered from the solid particles exits instead from the first outlet section 22A and is conveyed into the collection line 80. According to a preferred embodiment, shown in the figures, the second module 22 comprises a plurality of cyclone separators each with the features described above.

With reference to Figure 5, is it worth noting that the inlet section 22A of each cyclone separator is connected to the part 74A of the circulation line 70 through a connection stretch 75, e.g. flexible. Furthermore, it is worth noting that the first outlet section 22B of each cyclone is communicating with a rectilinear stretch 88 of the collection line 80 inclined with respect to the development direction 101. Similarly, the second outlet section 22C of each cyclone also communicates with a rectilinear stretch 81 A of the discharge line 81, which is substantially parallel to the mentioned stretch 88 of the collection line 80. This arrangement also contributes to making the structure of unit 1 more compact. In this regard, according to another aspect shown in figure 4, the cyclone separators of the second filtering module 22 are preferably arranged on one side of the supporting frame 12 opposite to the that which supports the first module 21.

The discharge line 81 of the water not filtered by the second module 22 has a further stretch 81 B, which is substantially parallel to the development direction 101 of the frame. Such a stretch 81 B is downstream of the inclined stretch 81 A with respect to the flow of water not filtered by the second module 22. With reference to Figure 5, once unit 1 has been inserted into the first compartment 200 of the tank 2, the water not filtered by the second module 22 is discharged, through the discharge line 81, into the tank itself. On the contrary, the water filtered by the second module 22 is taken outside the first compartment 200 of the tank 2 due to the particular configuration assigned by the collection line 80.

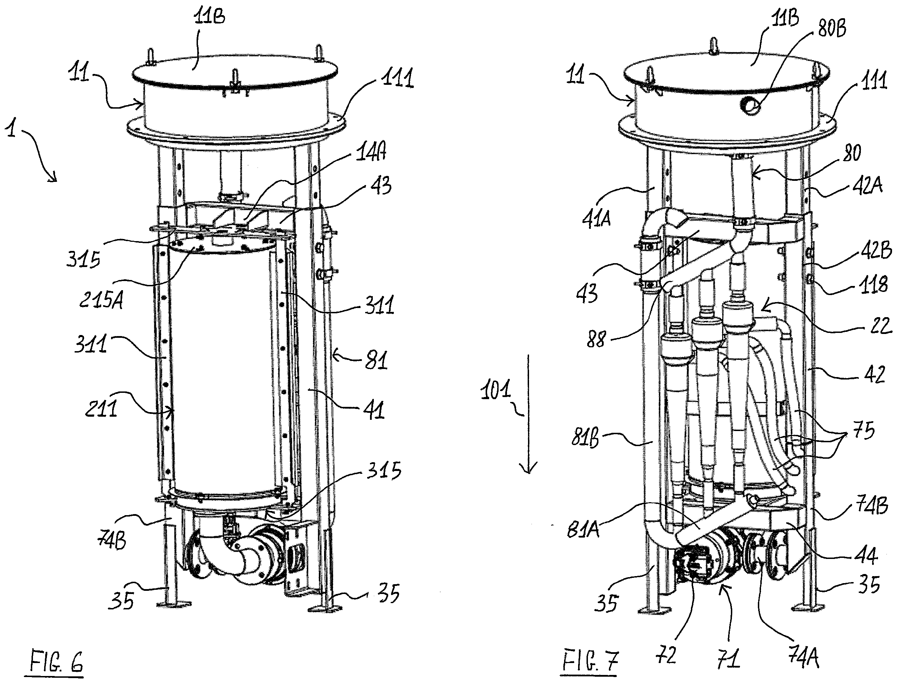

According to a further aspect, unit 1 comprises anchoring means for stably anchoring frame 12 into the compartment 200 once unit 1 is inserted into the tank itself. More specifically, such anchoring means allow to fix frame 12 in a stable manner to one or more brackets 35 (or supports) fixed inside tank 2, e.g. by welding. In a possible embodiment shown in Figures 6 and 7, the brackets 35 are fixed to the inner surface of tank 2 in a position substantially opposite to the opening of the manhole 114 through which frame 12 is inserted. Thereby, at least two anchoring points are generated in a position opposite to the base 10 fixed to tank 2. The connection means may comprise screw elements or functionally equivalent elements through which the longitudinal elements 41,42 are fixed to the brackets 35.

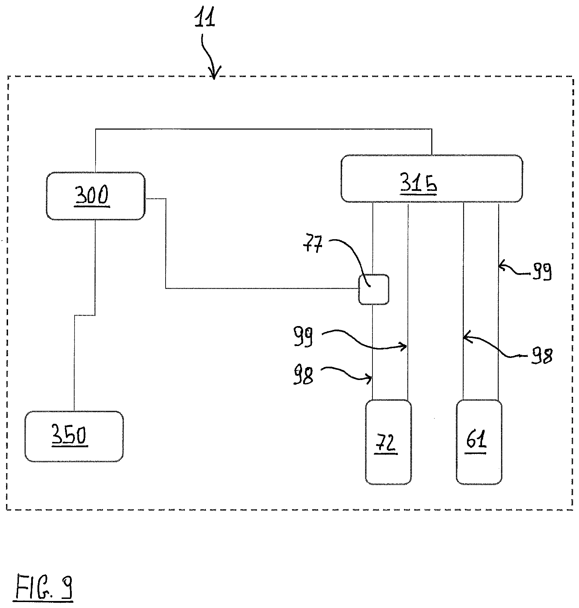

With reference to the diagram in Figure 9, the control means of unit 1 comprise a controller 300 and a hydraulic assembly 315 operatively connected to the hydraulic motors 61,72 which actuate pump 71 and the rotation of the cartridge 211 of the first module 21, respectively. In this regard, unit 1 comprises a feeding line 98 and a return line 99 of the oil for each hydraulic motor 61,72. The hydraulic assembly 315 handles the oil flow through said lines 98,99 and for this purpose comprises solenoid valves (not shown), the activation of which is adjusted by controller 300. In this regard, controller 300 sends the control signals to the hydraulic assembly 315, upon which the pump 71 and/or the hydraulic motor 61 of the first module 21 is activated/deactivated. Preferably, the hydraulic assembly 315 is configured to manage the operation of pump 71 with either fixed displacement or variable displacement.

According to a preferred embodiment, unit 1 comprises signaling means 350 elastically connected to controller 300 to indicate the operative states and/or possible operating abnormalities of the filtering modules 21,22. The signaling means 350, e.g. warning lights, are preferably installed on the body 11 A of containment 11 so as to be visible from the ground.

According to a preferred embodiment, the control means comprise pressure sensor means 77 associated with the hydraulic assembly 315 arranged within the containment 11. In particular, sensor means 77 detect the oil pressure along the feeding line 98 of the hydraulic motor 72 which actuates pump 71. Such a pressure is indicative of the water flow rate processed by the pump itself. In particular, a pressure line lower than a predetermined value indicates a substantially no-load operation of pump 71, and thus the absence of water in compartment 200. The presence/absence of water in compartment 200 is thus monitored by means of sensor means 77 which remain outside the compartment itself, as it is housed in containment 11.

The sensor means 77 are electrically connected to the controller 300 which intervenes on the hydraulic assembly 315 as a function of the received pressure signal. In particular, when the filtering unit 1 is activated, controller 300 sends a control signal to the hydraulic assembly, upon which the hydraulic motor 61 of the first module 21 and the hydraulic motor 72 of pump 71 are activated. When the pressure detected by the sensor means 77 is higher than a predetermined reference value, the two hydraulic motors 61,72 are maintained in the activated state. Instead, when the pressure is the lower than the reference value, the control 300 sends another control signal to the hydraulic assembly 315 after which the two hydraulic motors 61 and 72 are deactivated. The signaling means 350 shown above are configured so as to indicate the operative states (activation and deactivation) at least of the first filtering module 21 and/or of the pump 71.

In this regard, the driving and diagnosing of controller 300 can be performed remotely or alternatively even by exploiting discreet connections with CAN BUS protocol. In the case of a tank truck, the electrical power supply of controller 300, and more in general of the electrical part, is preferably derived from the vehicle which supports the tank itself. In fixed applications, the power supply may be obtained by means of autonomous batteries.

According to another aspect, an ON-OFF valve is provided along the water collection line 80, preferably in the stretch crossing container 11. The purpose of such a valve is to allow the water to pass in the open (ON) position or to prevent it in the closed (OFF) position. Preferably, the ON-OFF valve is also controlled by means of a solenoid valve controlled by controller 300. The latter sends an activation or deactivation signal after which the valve is selectively opened or closed. In particular, according to a preferred embodiment, controller 300 sends an activation control of the ON-OFF valve after a predetermined period of time from the activation of the hydraulic motor 61 which activates the first module 21.

A preferred mode of the control unit according to the invention derives from the above, which comprises at least the steps of:
a) activating the hydraulic motor 61 of the first module 21;
b) activating the circulation pump 71;
c) detecting the feeding pressure of the oil sent to the hydraulic motor 72 of pump 71 of the circulation line 70 by means of the sensor means 77;
d) keeping the hydraulic motor 61 of the first module 21 and the hydraulic motor 72 of pump 71 activated if the pressure detected in step c) is higher than a predetermined value, or
e) opening the ON-OFF valve of the collection line 80 after a predetermined interval of time from the activation of the first filtering module 21.
f) deactivating the hydraulic motor 61 of the first module 21 and the hydraulic motor 72 of pump 71 if the pressure detected in step c) is lower than a predetermined value.

It has been seen that this control method allows to obtain optimal filtering conditions thus ensuring a constant flow in the collection line 80 at the same time. In this regard, it has been seen that the rotary filter of the first module 21, in combination with the second module 22, comprises three cyclone separators to obtain a continuous variable filtering from 100 to 500 liters/minutes with filtering level from 30 to 50 microns.

The present invention further relates to equipment, preferably in the form of a tank truck, for collecting and treating sludge waste comprising a part of water, where said equipment comprises at least one tank 2 defining a compartment 200 for collecting said waste and at least one the manhole 114 defining a passageway for inserting filtering means into compartment 200. The equipment according to the invention is thus characterized in that the filtering means comprise a filtering unit 1 with the technical features and peculiarities described above.

It is worth nothing that unit 1 may also be inserted into a tank 2 in which the sludge collection compartment has an adjustable extension. For this purpose, the manhole 114 will be arranged in an appropriate position or alternatively a plurality of the manholes will be present. In general, due to the configuration of unit 1, the manufacturing and assembly cost for a piece of equipment, in particular a tank truck, will be advantageously lower than the solutions known from the prior art.

## Claims

1. A filtering unit (1) for separating and filtering water contained in sludge waste, said unit (1) being connectable to a tank (2) defining at least one collection compartment (200) of said sludge waste, **characterized in that** it comprises:
- a first filtering module (21) and a second filtering module (22) for filtering said water,
- a circulation line (70) for transferring the filtered water from said first module (21) to said second module (22);
- a collection line (80,80A) to collect and convey the part of said water filtered by said second module (22),
- a supporting frame (12) which supports said filtering modules (21,22) and which is either partially or completely insertable in said compartment (200) through a the manhole (114) of said tank (2); and
- connection means configured to form a connection between said frame (12) and said tank (2) so that said filtering modules (21,22) are operatively arranged within said compartment (200) upon such a connection.

2. A unit (1) according to claim 1, wherein said connection means comprise a base (10) comprising a first side (10A) from which said supporting frame (12) develops, said base (10) comprising a flange (111) connectable to a corresponding flange (112) of said the manhole (114).

3. A unit (1) according to claim 2, wherein said unit (1) comprises a containment (11) which develops from a second side (10B) of said base (10) opposite to said first side (10A), said unit (1) comprising control means (1) of said unit housed in said containment (11).

4. A unit (1) according to claim 2 or 3, wherein said connection line (80) crosses said base (10) so that the water filtered by said second module (22) exits from said compartment (200) after connecting said base (10) to said the manhole (114).

5. A unit (1) according to any one of the claims from 1 to 4, wherein said frame (12) comprises means for adjusting the extension of the frame itself along a reference direction.

6. A unit (1) according to claim 5 when dependent on claim 2, wherein said base (10) develops on a plane (100) and wherein said frame (12) develops mainly along a development direction (101) which is substantially orthogonal to said plane (100), said adjustment means allowing an adjustment of the extension of said frame (12) along a reference direction parallel to said development direction(101).

7. A unit (1) according to claim 6, wherein said frame (12) comprises:
- two longitudinal elements (41,42), connected to said first side (10A) of the base (10), which develop along said development direction (101);
- two transversal elements (43,44) which prevalently develop along a transversal direction (102) which is substantially orthogonal to said development direction (101), wherein a first transversal element (43) is connected to the two longitudinal elements (41,42) in a position close to the base (10), and wherein second transversal element (43) is connected to the longitudinal elements (41,42) in a position close to a terminal part of said longitudinal elements (41,42) which is opposite to the base (10) itself.

8. A unit (1) according to any one of the claims from 1 to 7, wherein said circulation line (70) comprises a circulation pump (71) the suction of which is connected to the outlet of said first module (21) and the delivery of which is connected to an inlet section of said second module (22), said pump (71) being actuated by means of a hydraulic motor (72).

9. A unit (1) according to claim 8, wherein said circulation line comprises a first stretch (73), which connects said first module (21) to the suction of said pump (71), and a second stretch (74A, 74B), which connects the delivery of said pump (71) to said second module (22), said second stretch (74A, 74B) being partially defined by an internally hollow part (74B) of an element (41) of said frame (12).

10. A unit (1) according to any one of the claims from 1 to 9, wherein said first filtering module (21) comprises a filtering cartridge (211) and rotation means (61) for rotating said cartridge (211) about a predetermined rotation axis (150).

11. A unit (1) according to any one of the claims from 1 to 10, wherein said second module (22) comprises at least one cyclone separator, which includes an inlet section (22A) communicating with said circulation line (70), a first outlet section (22B) communicating with said collection line (80,80A) and a second outlet section (22C) communicating with said discharge line (81), said cyclone separator comprising a substantially cylindrical part (25) communicating with said inlet section (22A) and with said first outlet section, and a conical part (26), underneath said cylindrical part (25) and defining said second outlet section (22C), wherein the inlet of said water into said cylindrical part occurs according to a tangential direction.

12. A unit (1) according to claim 1, wherein said unit comprises control means and wherein:
- said circulation line (70) comprises a circulation pump (71), the suction of which is connected to the outlet of said first module (21) and the delivery of which is connected to an inlet section of said second module (22), said pump (71) being actuated by means of a hydraulic motor (72) and wherein:
- said control means comprising a controller (300) and a hydraulic assembly (315) operatively connected to said hydraulic motor (72) of said pump (71), said controller (300) sending control signals to said hydraulic assembly (315) after which said hydraulic motor (72) of said pump (71) is activated/deactivated, and wherein said unit (1) comprises sensor means (77), electrically connected to said controller (300) and configured to detect the oil pressure in a feeding line of said hydraulic motor (72), wherein said controller (300) controls the deactivation of said hydraulic motor (72) when said oil pressure is lower than a predetermined reference value.

13. A unit (1) according to claim 12, wherein said first filtering module (21) comprises a filtering cartridge (211) and a hydraulic motor (61) to rotate said filtering cartridge (211) about a predetermined rotation axis (150), said hydraulic assembly (315) being operatively connected to said hydraulic motor (61) of said first module (21), said controller (300) sending control signals to said hydraulic assembly (315) upon which said hydraulic motor (61) of said first module (21) is activated/deactivated.

14. A unit (1) according to claim 13, wherein said pressure of said oil is lower than said predetermined reference value, said controller (300) sends a control signal after which said hydraulic assembly (315) deactivates said hydraulic motor (61) of said first module (21).

15. A unit (1) according to claim 13 or 14, wherein said unit (1) comprises an ON-OFF valve to allow/prevent the water to pass/from passing along said collection line (80,80A), said ON-OFF valve being electrically connected to said controller (300) which activates said ON-OFF valve after a predetermined activation time of said hydraulic motor (61) of said first module (21).

16. Equipment for collecting and/or treating sludge waste comprising a part of water, wherein said equipment comprises at least one tank (2) defining at least one compartment (200) for the collection of said waste, said tank (2) comprising at least one the manhole (114) which defines a passageway for the insertion of filtering means in said compartment (200), **characterized in that** said filtering means comprise a filtering unit (1) according to any one of the claims from 1 to 15.
